# EUROPEAN PATENT APPLICATION

(11) **EP 4 358 348 A1**
(43) Date of publication of application: **24.04.2024**
(21) Application number: 22383007.6
(22) Date of filing: 20.10.2022
(51) Int. Cl.: H02J 7/00

(54) **SYSTEM FOR BALANCING BATTERY MODULES**

(71) Applicant: Siemens Gamesa Renewable Energy Innovation & Technology S.L., 31621 Sarriguren (Navarra) (ES)
(72) Inventor: The designation of the inventor has not yet been filed
(74) Representative: SGRE-Association

(57) **Abstract**

The invention refers to a multi-port high-power converter system for battery balancing at module level. The system comprises a transformer having a plurality of windings and a single core for all the windings, and a set of DC-AC converters individually connected with the windings of the transformer, and a control unit for controlling the operation of the converters, for converting a DC voltage into an AC signal and vice versa. The control unit is adapted for controlling the converters of the set of converters, such that power of the battery modules can be transferred through any selection or two or more converters, and through the transformer core when the converters are connected individually with battery modules. The invention also refers to a method for balancing a system of battery modules connected in series using a multi winding transformer.

## Description

### TECHNICAL FIELD

The present invention relates to a high-power converter system for battery balancing at module level.

### BACKGROUND OF THE INVENTION

There are many types of energy storage technologies. One of the most popular is battery-based energy storage. Batteries are nowadays used for many mature applications (consumer electronics, UPS, vehicles,...) and they are the preferred choice for some emerging applications, such as electric vehicles and renewable energies.

The fundamental unit used to build a battery is called cell. A cell's rated voltage is typically of a few volts, depending on the chemistry used for its manufacture, and since most applications require higher voltages, cells are usually connected in series to satisfy this requirement. In many cases, manufacturers provide battery modules, which consist of a group of series-connected cells put into a frame to protect them better from external shocks such as heat or vibration. Modules also have a voltage rating, given by the number and voltage of its cells.

Finally, the most common solution in high power applications consists of several modules together with a Battery Management System (BMS) and a cooling system. This whole set of modules together with a BSM and cooling is called pack in the automotive industry. A similar concept is usually proposed for renewable energies, based on battery racks.

Electrically speaking, the energy storage system provides a total voltage that is equal to the sum of the cell voltages connected in series. In practice, cells tend to get unbalanced with time and use. This unbalancing phenomenon depends on many factors, including chemistry, number of cells in series, and operating conditions. Anyhow, balancing solutions are usually provided at the module level (cell balancing) and sometimes also at the pack/rack level (module balancing).

Balancing techniques are usually classified into two main categories: passive balancing and active balancing. The former relies on resistors to consume the excess energy of the cells/modules with higher voltage, while the latter uses switches and auxiliary energy storage (inductors or capacitors) to transfer energy between cells/modules. Active balancing is based in active electronic components, and therefore is more complex and prone to failures, but achieves non-dissipative balancing, and therefore is preferred when energy efficiency is required.

Many methods have already been proposed for active balancing. They usually belong to one of the following three types: capacitor-based, inductor-based or transformer-based. Most proposals are applicable to cell balancing, as that is the most common issue in batteries. Apparently, cell balancing is enough in many cases, at least for lithium-based chemistries.

A known solution is based on inductors for Lithium-Ion Batteries Based on Coupled Inductor Balancing, that relies on one or multiple inductors as the main element to regulate energy transfer between cells. However, in this solution, if energy is transferred from the battery at the top to the one at the bottom, this energy must be recirculated through intermediate cells.

Other known methods based on inductors that allow the equalization of all the cells simultaneously, being able to balance any cell independently without having to circulate the current through other cells, also rely on one or multiple inductors as the main element to regulate the energy transfer between cells, and the energy can be transferred between any cell or battery block without having to circulate the energy through intermediate cells or battery blocks. However, in these alternative methods there is no galvanic isolation between cells, and the switching devices must support a voltage close to the full battery voltage, and inductors have to carry twice the current circulating into a battery cell.

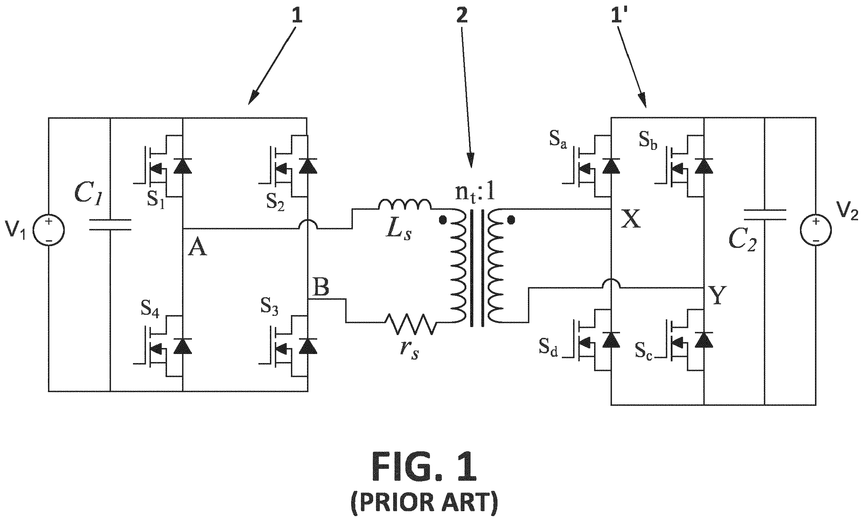

Other known solutions are based on a well-known power electronics topology called Dual Active Bridge (DAB). **Figure 1** shows a schematic of this topology. A DAB is a bidirectional DC-DC converter with identical primary and secondary side full-bridges (1,1'), a high frequency transformer (2), an energy transfer inductor (Ls) and DC-link capacitors (C1,C2).

The two legs of both full-bridges (1,1') are driven with complimentary square-wave pulses. Power flow is controlled by phase-shifting the pulses of one bridge with respect to the other. The control directs power between the two DC buses such that the leading bridge delivers power to the lagging bridge. Many modulation techniques have been proposed for DAB converters, the principal being: i) phase-shift modulation with 50% duty cycle; ii) triangular modulation with three-level switched voltage waveforms at low current; and iii) trapezoidal modulation with three-level switched voltage waveforms at high current.

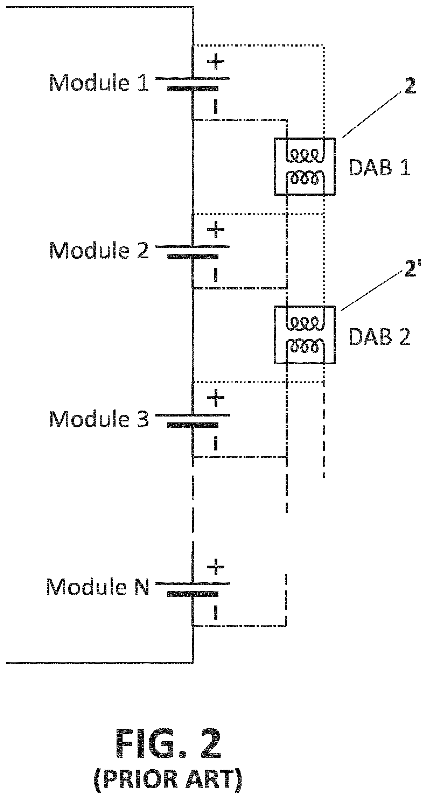

DAB have already been proposed for battery balancing. However, they are usually used in a two-port configuration, so that one single DAB needs to be used between each two battery modules, as illustrated in **Figure 2****.** Thus, a large number of components are necessary, and the efficiency of the power transfer is low.

Particularly, in renewable energy applications, flow batteries are becoming increasingly interesting, as well as some lithium-based applications, that also need balancing at the module level. The flow batteries technology involves series connection of battery modules rated at a few hundred volts.

High power batteries for renewable energy applications are usually installed in floating configuration, meaning that both the positive and negative poles are isolated from ground. This requirement is imposed by the battery manufacturer, and non-compliance could lead to long-term degradation and malfunction. Any balancing device must use a power topology compatible with this floating configuration.

### SUMMARY OF THE INVENTION

An object of the invention is the provision of a converter topology that can be manufactured with a reduced number of components in order to reduce manufacturing costs, and that it is highly efficient in the transfer of energy between battery modules, especially applicable for balancing battery modules in renewable energy applications.

The invention is defined in the attached independent claims, and satisfactorily solves the above-described drawbacks of the prior art, by the provision of a multi-port topology (at least three ports) for high-power active battery balancing at the module level, that can operate with high voltage modules (a few hundreds of Volts), such as those usually found in flow batteries.

In the present disclosure, module-balancing should be understood as balancing a small number (at least three) of voltage sources (the battery modules) and that the power topology is capable of reaching significant high voltage levels, tens, or even hundreds of Volts per module. In contrast to module-balancing as defined above, cell-balancing works with many cells or voltage sources (hundreds) of very low voltage (a few Volts).

Since systems for module balancing are different than those for cell balancing for the reason explained above, so that module balancing requires specific approach.

Therefore, an aspect of the invention refers to a system for balancing battery modules, wherein the system comprises a multi-winding transformer, that is, a transformer having a three or more windings and a single core in common for all the windings, such that all windings are electromagnetically coupled through the single core.

The system further comprises a set of three or more DC-AC converters that are individually connected with the windings of the transformer, that is, the output port of each converter of the set is connected with the two terminals of a winding of the transformer. For that, the transformer has at least the same number of windings than converters.

The multi-winding transformer, provides galvanic isolation for each one of the converters and the respective battery module connected to it, so that the converters can be regarded as isolated converters.

The converters are adapted to be connected directly or indirectly with the battery modules of a system of batteries. Preferably, each converter is connected to a battery module by means of a filter in order to avoid recirculation from one battery module to another.

The system may comprise a control unit for controlling the operation of the converters, by means of any known control or modulation method, for converting a DC voltage into an AC signal and vice versa.

The control unit may be implemented as one or more microcontrollers.

The control unit may be adapted for controlling the converters, such that power of one or more (overcharged) battery module or modules, can be transferred to one or more (undercharged) battery module or modules through a proper selection of converters for that purpose (depending of the number of converters involved in the power transfer in each case), and through the transformer core, when the converters are connected individually with battery modules.

In this way, multiple battery modules can be balanced at the same time in a direct and isolated manner using a reduced number of components. In addition, and in contrast with prior art solutions, the switches of the converters only must support the voltage of one module instead the full voltage of the system of batteries, and the transformer's windings only need to withstand current of one battery module.

Additionally, the system may comprise means for measuring current at each winding of the transformer, and the control unit is adapted to control each converter to ensure zero voltage switching operation based on the measured current.

Preferably, the control unit may be adapted to control the converter, by modifying the duty cycle and the phase shift **(*ϕ*)** to operate the same under Zero Voltage Switching (ZVS) condition. For this, a switching frequency **(*fsw*)** in common for all the converters, is selected, and a specific phase shift (***ϕ***) and duty cycle are used to control power transfer between battery modules.

Preferably, all the converters of the set may have the same circuit topology. In a preferred embodiment all the converters of the set are full-bridge DC-AC converters. In another preferred embodiment all the converters of the set are half-bridge DC-AC converters.

The system may include a tank circuit comprising at least one inductor and at least one capacitor connected in a known topology, which might be resonant or not. The tank circuit is provided for each converter of the set, connected in series between the converter output and the respective winding of the transformer, so that there is always an inductor between the modules that transfer power among them.

Furthermore, the system may comprise means for measuring voltage and/or current at each battery module when the converters are connected individually to the battery modules, and the control unit is further adapted for detecting balanced and unbalanced battery modules, and for disconnecting or switching off battery modules that do not require balancing, that is, battery modules that are balanced.

In a preferred embodiment, each converter of the set of converters, has two terminals and two branches connected in parallel between the two terminals, each branch having a pair of semiconductor switching devices connected in series. The tank circuit is connected in series between an intermediate connection line between a pair of semiconductor switching devices connected in series, and one terminal of the respective winding connected to the converter.

In a preferred embodiment, each converter of the set of converters, has two terminals and a pair of semiconductor switching devices connected in series between the terminal. The tank circuit is connected in series between an intermediate connection line between the two semiconductor switching devices and one terminal of the respective winding connected to the converter.

In a preferred embodiment, each converter of the set of converters, has two terminals and two branches connected in parallel between the two terminals, such that a first branch has a pair of semiconductor switching devices connected in series between the terminal, a second branch has a pair of DC blocking capacitors connected in series. Each converter has an inductor connected in series between the intermediate connection line between the two semiconductor switching devices and one terminal of the respective winding, or between the intermediate connection line between the two DC blocking capacitors and one terminal of the respective winding.

Other aspect of the invention refers to a battery rack system, that may comprise a plurality of battery modules connected in series, a Battery Management System, and a battery module balancing system as the one previously defined, wherein each converter is connected to a battery module.

Another aspect of the invention refers to a battery pack architecture, that may comprise two or more battery rack systems as the one defined above, and a common bus interconnecting the battery rack systems in parallel.

Another aspect of the invention refers to a method for balancing a system of battery modules connected in series, wherein the method comprises the steps of providing a multi-winding transformer, that is, a transformer having a three or more windings and a single core in common for all the windings, and a set of three or more DC-AC converters individually connected with the windings of the transformer, preferably by means of tank circuit comprising at least one inductor and at least one capacitor connected in a known topology, which might be resonant or not. The converters are connected to the system of battery modules, such that each converter of the set is connected to a battery module.

The method may comprise the step of measuring voltage and/or current in each battery module, and detecting balanced modules that is, detecting battery modules that have the expected charge, and detecting unbalanced battery modules, that is, modules that are overcharged or undercharged.

The method may comprise the step of transferring power directly (without circulating power through intermediate battery modules) between two or more battery modules through the respective converters connected to those modules, and the transformer, for balancing the system of battery modules, so that power from an overcharged module can be transferred to one or more undercharged modules.

Therefore, the above-described topology of the system of the invention, allows transferring energy directly between any selection of power modules (adjacent or not), without the need of circulating energy through intermediate battery modules.

The use of the invention is particularly advantageous in renewable energy applications, wherein flow batteries are becoming increasingly demanded, as well as some lithium-based applications which also need balancing at the module level. Flow batteries technology involves series connection of battery modules rated at a few hundred volts. As the application demands power levels around 100 kW - 10 MW, balancing power will typically reach power levels around tens of kW.

These and other advantages and features of the invention will become apparent in view of the figures and detailed description of the invention.

### BRIEF DESCRIPTION OF THE DRAWINGS

Figure 1 shows an electric diagram of a Dual Active Bridge, DAB, topology according to the prior art.
Figure 2 shows an electric diagram of a two-port DAB topology for battery balancing according to the prior art.
Figure 3 shows an electric diagram of a multi-port topology according to the present invention.
Figure 4 shows another electric diagram of a multi-port topology according to the present invention.
Figures 5A and 5B show in two electric diagrams the efficiency achieved by the invention (Figure 5B) for transferring power between modules 1 and 4, compared with prior art solution (Figure 5A) wherein the arrows indicate power transfer between battery modules.
Figures 6A and 6B show an electric diagram of half bridge configurations, in Figure 6A with a DC blocking capacitor placed in series, and in Figure 6B with a DC blocking capacitor placed in split configuration.
Figure 7 shows an electric diagram of a full bridge configuration with DC blocking capacitor.
Figure 8 shows an electric diagram of battery racks interconnection.

### DESCRIPTION OF PREFERERED EMBODIMENTS OF THE INVENTION

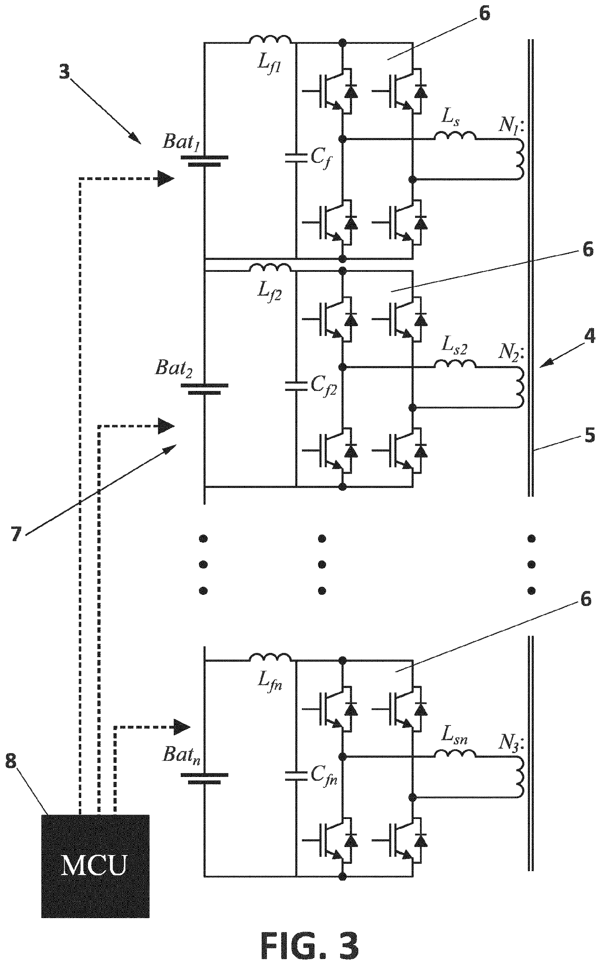

**Figure 3** shows a system (3) for balancing battery modules (Bat1,Bat2,...,Batn) of a system of batteries (7) connected in series, and conventionally managed by a Battery Management Module.

The system (3) may comprise a transformer (4) having a plurality of windings (N1,N2,...,Nn) and a single core (5) in common for all the windings (N1,N2,...,Nn), and a set of DC-AC converters (6) individually connected with the windings (N1,N2,...,Nn) of the transformer (4) and with the battery modules (Bat1,Bat2,...,Batn) as shown in **Figure 3****,** for converting the DC power of the battery modules into AC power. In the example of **Figure 3** all the converters have the same circuit topology, a full-bridge topology in this practical example.

More in detail, each DC-AC converter (6) is connected at its output port with a winding (N1,N2,...,Nn) of the transformer (4), and with a battery module (Bat1,Bat2,...,Batn) at the converter's input port.

The system (3) may comprise a control unit (8) for controlling the operation of the converters (6), for converting a DC voltage into an AC signal (and vice versa) in a known manner.

The control unit (8) may be implemented as a microcontroller placed in any one of the converters, and driving signals and sensing signals are sent from it to the rest of the converters. It other alternative examples, a microcontroller is provided in each converter, and a master microcontroller manages all the microcontrollers.

As represented in **Figure 3****,** each converter (6) may be connected to the respective winding (N1,N2,...,Nn) by means of an inductor (Ls1, Ls2,..., Lsn) connected in series between the converter output and the respective winding of the transformer (4). Those inductors can be included partially or totally in the transformer as the leakage current of the transformer.

In addition, each converter (6) of the set of converters may be connected to a battery module (Bat1,Bat2,...,Batn) by means of a tank circuit or filter, which in the example of **Figure** 3, comprises a capacitor (Cf1, Cf2,..., Cfn) in parallel with the input port of each converter (6), and an inductor (Lf1, Lf2,..., Lfn) in series at the input port of each converter (6) .

As it can be appreciated in **Figure 3****,** the electric connections of the invention is different from prior art solutions, because in the present invention the negative terminal of the input port of each converter (6) is connected to the negative terminal of the respective battery module (Bat1,Bat2,...,Batn), and the negative terminal of the input port of each converter (6), is also connected with the positive terminal of one of the consecutive battery module and converter.

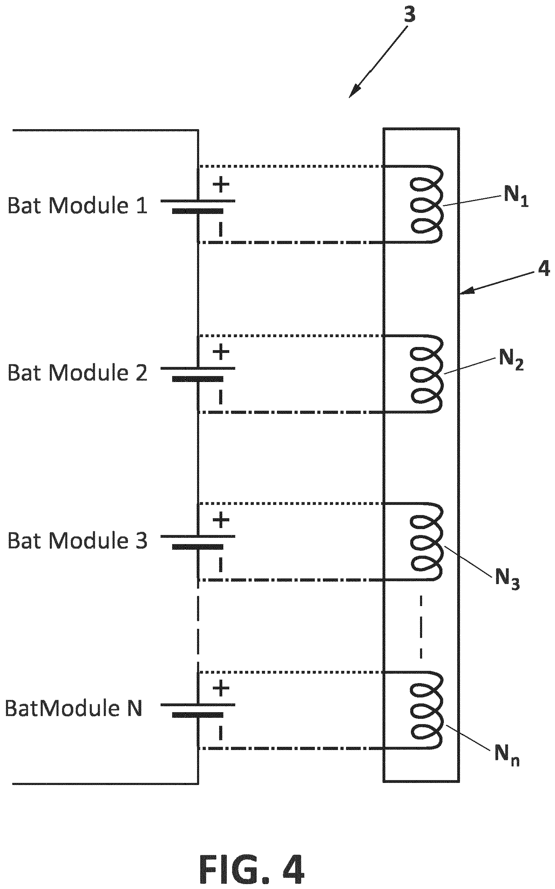

**Figure 4** illustrates the cost reduction advantage achieved by the invention, as having a multi-port topology based on the multi-wing transformer, saves material costs with respect to the two-port DAB solution of the prior art. Comparing **Figure 1** and **Figure 3****,** it is clear that the number and rating of power switches is reduced. The same applies to the number of filters (capacitors and inductors) and electrical switch-gear/protections (contactors, breakers, fuses...). However, while N transformers are needed for the two-port solution of the prior art, only one multi-winding transformer is used in the multi-port topology of the invention. Similarly, one single control unit (with enough control ports) is enough for implementing the present invention.

Additionally, one single enclosure is used, instead of a plurality of enclosures, which is actually very relevant, as enclosures may account for a significant part of the total cost.

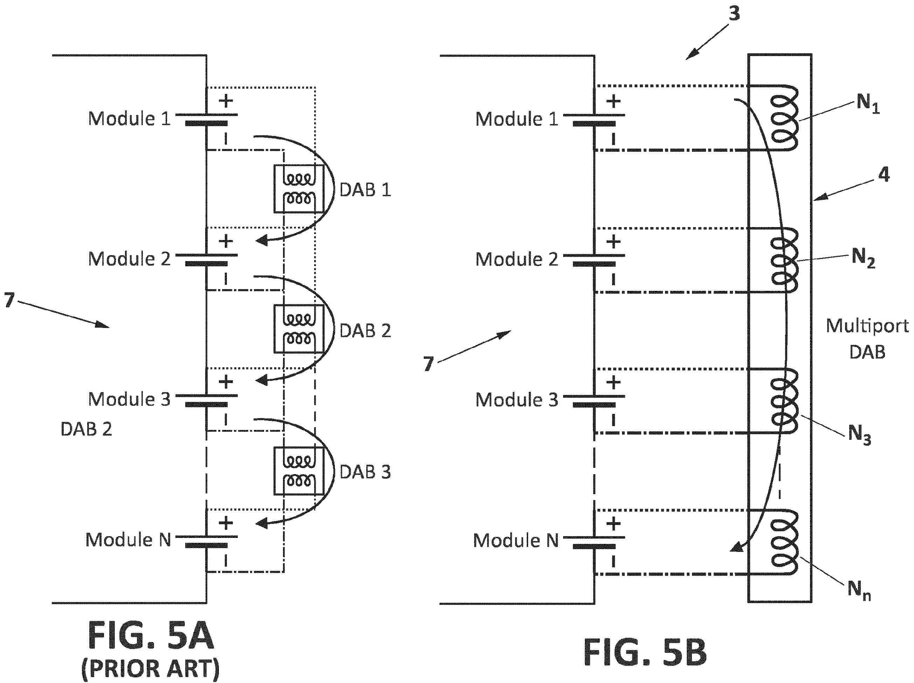

**Figures 5A** and **5B** illustrate the advantage achieved by the invention during the power transfer between non-adjacent battery modules. In the comparative example of these figures, assuming that Battery Module 1 is slightly overcharged, Battery Module 4 is slightly undercharged, and the rest are balanced. Thus, power must be transferred from Battery Module 1 to Battery Module 4 to completely balance the system.

In the two-port solution of the prior art **(****Figure 5A****),** power must be transferred from Battery Module 1 to Battery Module 2, then from Battery Module 2 to Battery Module 3, and finally from Battery Module 3 to Battery Module 4. This implies using three power converters, being Battery Modules 2 and 3 intermediate modules used for power transit. However, with the system (3) of the invention, power is directly transferred from Battery Module 1 to Battery Module 4 **(****Figure 5B****)** through the multi winding transformer (4), thereby, improving energy efficiency and activating less components.

In addition to the above described advantages, the invention implies lower utilization factors in each of the converters, that is, drivers and power switches are used a smaller number of hours per year and/or they work at a lower pow-er/temperature in average, which in turn implies higher lifetime and lower failure rates.

Furthermore, as it can be appreciated in **Figure 5B****,** each battery module contains its own switching devices which support the module voltage instead of the full battery voltage. In the proposed solution, each inductor carries just a current value close to the current flowing to the battery module.

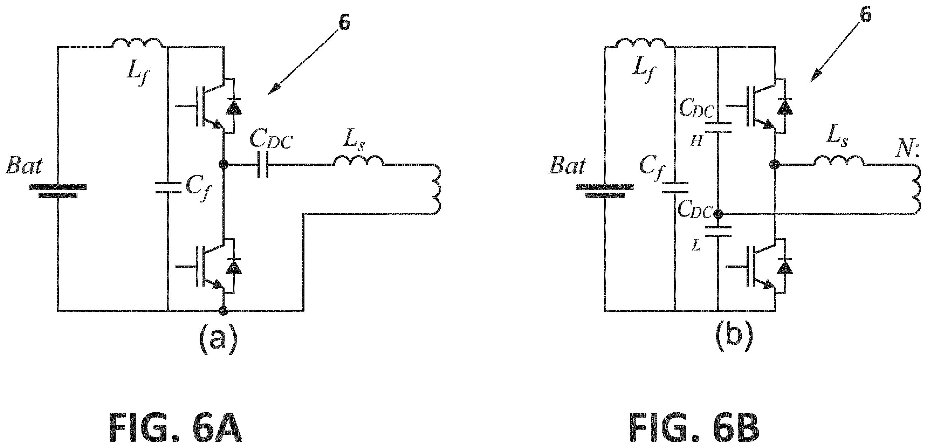

Alternatively to the full-bridge converters of **Figure 3****,** the converters (6) may also be implemented with another topology depending on the requirements such as battery voltage levels, power or cost considerations. For example, as shown in **Figures 6A** the converters (6) can be implemented as half-bridge converters having only two transistors and a capacitor (Cdc) in series with the inductor (Ls) that is necessary to block the DC current. Alternatively, this capacitor (Cdc) can be in split mode, i.e. two capacitors (Cdcl, Cdcl1); as shown in **Figure 6B** to better facilitate filtering.

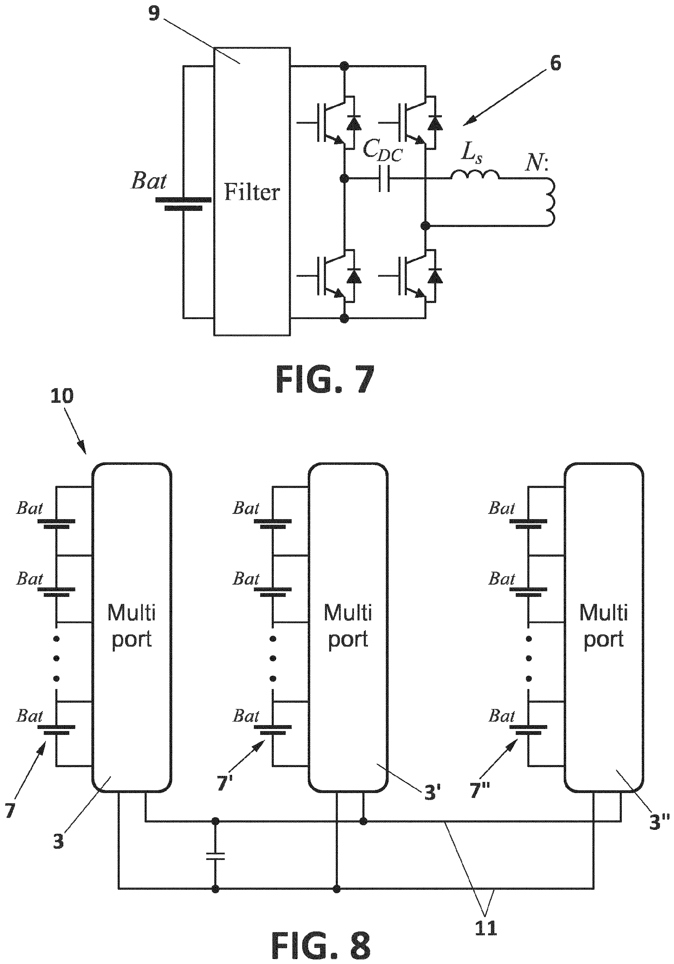

It is important to note that in all the alternatives described above, it is necessary to prevent the transformer (4) from saturating due to the existence of a direct current. In the embodiment of **Figure 3** with full bridges, means for measuring current through the inductance (Lf1, Lf2,...,Lfn) are provided to avoid saturation of the transformer, or alternatively, as described in **Figure 7****,** a capacitor (Cdc) can be installed in series the inductance (Lf1, Lf2,..., Lfn).

**Figure 7** also shows that a filter (9) can be connected at the input port of each converter (6) as necessary. Any type of filter may be used, such as a pi or T filter.

The system (3) may incorporate means for measuring current at each winding (N1,N2,...,Nn) of the transformer (4), and means for measuring voltage at the input port of each converter (6) .

The current and voltage measurements, can also be obtained from the Battery Management System (BMS), already provided in the system of batteries.

For safety reasons, the current that flows through each winding of the transformer may also be monitored, the control unit may be adapted to operate each converter to ensure zero voltage switching operation based on the measured current, and remove DC current levels.

The control unit can detect balanced and unbalanced battery modules, and it may disconnect or switch off, for example by means of relays, balanced battery modules.

In the embodiments of **Figures 6A, 6B** and **7****,** the DC blocking capacitor (Cdc) can be chosen to be of a lower value so that in addition to blocking the DC current, it can form a LC resonant tank, to resonate with the series inductor (Lf1, Lf2, ..., Lfn) to reduce the switching losses. Other type of resonant tanks different than LC, can also be used depending on the application.

**Figure 8** shows a preferred implementation of the invention, as a battery pack architecture (10), comprising a plurality of battery rack systems (7, 7',7") and respective battery module balancing systems (3, 3', 3") as the one defined above, and a common bus (11) interconnecting all the battery rack systems (7, 7',7") in parallel, such that energy can be transferred between racks by means of the common bus (11).

To facilitate the control, relays or contactors can be placed to allow the connection and disconnection of the common bus.

In this common bus there can be a common or distributed capacitor (C) in each of the modules.

The method of the invention for balancing a system of battery modules (7) is illustrated in **Figure 5B****,** and it comprises providing a transformer (4) having a plurality of windings (N1,N2,...,Nn) and a single core (5) in common for all the windings, and a set of DC-AC converters (6) individually connected with the windings (N1,N2,...,Nn) of the transformer (4).

Voltage and/or current in each battery module are measured, in order to detect balanced and unbalanced battery modules. Then, power is transferred between any pair of battery modules through the respective converters and the transformer for balancing the system of batter modules.

In the case that two or more uncharged battery modules are detected, or two or more overcharged battery modules are detected, the control unit is adapted to select the best match of battery modules for transferring power in terms of efficiency as explained before in relation to **Figure 5B****.**

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. System (3) for balancing battery modules, the system comprising:
a transformer (4) having three or more windings (N1,N2...,Nn) and a single core (5) in common for all the windings,
a set of three or more DC-AC converters (6) individually connected with the windings (N1,N2...,Nn) of the transformer (4), and adapted to be connected individually with a battery module (Bat1,Bat2...,Batn) of a system of batteries (7),
a control unit (8) for controlling the operation of the converters (6) of the set, for converting a DC voltage into an AC signal, and
wherein the control unit (8) is further adapted for controlling the converters (6) of the set of converters, such that power of one or more battery modules can be transferred to other battery module or battery modules through a selection of two or more converters (6), when the converters (6) are connected individually with the battery modules (Bat1,Bat2...,Batn).

2. System according to claim 1, wherein all the converters (6) of the set are full-bridge DC-AC converters, or half-bridge DC-AC converters.

3. System according to claim 1 or 2, further comprising means for measuring current at each winding of the transformer (4), and wherein the control unit (8) is adapted to control each converter (6) to ensure zero voltage switching operation based on the measured current.

4. System according to claim 1, wherein the control unit (4) is adapted to control the converter, by modifying the duty cycle and the phase shift **(*ϕ*)** to operate the same under (ZVS) Zero Voltage Switching condition.

5. System according to any of the preceding claims, comprising tank circuit for each converter of the set, connected in series between the converter output port and the respective winding of the transformer (4).

6. System according to any of the preceding claims, comprising means for measuring voltage and/or current at each battery module when the converters (6) are connected individually to the battery modules, and wherein the control unit (8) is further adapted for detecting balanced and unbalanced battery modules, and for disconnecting or switching off balanced battery modules.

7. System according to any of the preceding claims, wherein each converter (6) of the set of converters has a filter (9) at its input port.

8. System according to claim 5, wherein the tank circuit comprises at least one inductor and at least one capacitor, and wherein the tank circuit is resonant or not.

9. System according to any of the preceding claims, wherein the control unit (8) is implemented as one or more microcontrollers.

10. System according to claim 3 and 5, wherein each converter (6) of the set of converters, has two terminals and two branches connected in parallel between the two terminals, each branch having a pair of semiconductor switching devices connected in series, and wherein the tank circuit is connected in series between an intermediate connection line between a pair of semiconductor switching devices connected in series, and one terminal of the respective winding connected to the converter.

11. System according to claim 3 and 5, wherein each converter (6) of the set of converters, has two terminals and a pair of semiconductor switching devices connected in series between the terminal, and wherein the tank circuit is connected in series between an intermediate connection line between the two semiconductor switching devices and one terminal of the respective winding connected to the converter.

12. System according to claim 3 and 5, wherein each converter (6) of the set of converters, has two terminals and two branches connected in parallel between the two terminals, such that a first branch has a pair of semiconductor switching devices connected in series between the terminal, a second branch has a pair of DC blocking capacitors connected in series, and wherein each converter has an inductor connected in series between the intermediate connection line between the two semiconductor switching devices and one terminal of the respective winding, or between the intermediate connection line between the two DC blocking capacitors and one terminal of the respective winding.

13. A battery rack system, comprising a plurality of battery modules (7,7',7") connected in series, and a battery module balancing system (3) as the one defined in any of the preceding claims, wherein each converter (6) is connected to a battery module.

14. A battery pack architecture, comprising two or more battery rack systems as the one defined in claim 13, and a common bus (11) interconnecting the battery rack systems in parallel.

15. Method for balancing a system of battery modules connected in series, the method comprising the steps of:
- providing a transformer (4) having a three or more windings (N1,N2...,Nn) and a single core (5) in common for all the windings, and a set of three or more DC-AC converters (6) individually connected with the windings of the transformer (4),
- measuring voltage and/or current in each battery module (Bat1,Bat2...,Batn),
- detecting balanced and unbalanced battery modules (Bat1,Bat2...,Batn), and
- transferring power between two or more battery modules (Bat1,Bat2...,Batn) through the respective converters (6) and the transformer (4) for balancing the system of battery modules.
